# EUROPÄISCHE PATENTSCHRIFT

(11) **EP 3 816 771 B1**
(45) Veröffentlichungstag und Bekanntmachung des Hinweises auf die Patenterteilung: **06.12.2023**
(21) Anmeldenummer: 19205710.7
(22) Anmeldetag: 28.10.2019
(51) Int. Cl.: G06F 3/01, G06F 3/02, G06F 3/06, G06F 16/22

(54) **RESSOURCENSPARENDES SPEICHERN VON ZEITREIHENDATEN**
RESOURCES EFFICIENT STORAGE OF TIME SEQUENCE DATA
MÉMOIRE À ÉCONOMIE DE RESSOURCES DES DONNÉES DE SÉRIE TEMPORELLES

(43) Veröffentlichungstag der Anmeldung: 05.05.2021
(73) Patentinhaber: SMA Solar Technology AG, 34266 Niestetal (DE)
(72) Erfinder: TUEMMLER, Joern, 34317 Habichtswald (DE); EHLE, Arno, 34128 Kassel (DE); CHRISTEN, Paul, 34119 Kassel (DE); ESNAASHARY, Arash, 34253 Lohfelden (DE)

(56) Entgegenhaltungen:
- CN-A- 107 491 458
- US-A1- 2017 161 340
- US-A1- 2019 026 349

## Beschreibung

### GEBIET DER ERFINDUNG

Die Erfindung betrifft das Gebiet des Speicherns von Zeitreihendaten. Insbesondere betrifft die Erfindung ein Verfahren, ein Computerprogramm und ein computerlesbares Medium zum ressourcensparenden Speichern von Zeitreihendaten aus einer Mehrzahl von Kanälen in einem Flashspeicher. Weiter betrifft die Erfindung eine Zeitreihendatenbank.

### HINTERGRUND DER ERFINDUNG

Zeitreihendaten bzw. Zeitseriendaten sind Daten, die in einem regelmäßigen zeitlichen Intervall wiederholt anfallen. Da man an dem zeitlichen Verlauf der Daten interessiert ist, ist es nicht ausreichend, lediglich einen aktuellsten Wert zu speichern, sondern es sollten alle Datenpunkte mit den jeweiligen Zeitstempeln festgehalten werden. Zeitreihendaten fallen beispielsweise als Messreihen in einer technischen Anlage an, wie etwa Temperatur oder Energiewert. Eine solche Messreihe kann auch Kanal genannt werden. Je nach Anzahl der Kanäle und Größe des Betrachtungszeitraums können so sehr große Datenmengen entstehen.

Es gibt unterschiedliche Arten von persistenten Speichern. Bestimmte Flashspeicher, wie etwa eMMC (embedded Multi Media Card), sind in Blöcke mit einer Hersteller-abhängigen Größe aufgeteilt. Ein Flashspeicher erlaubt es, nur einen Block im Ganzen zu löschen (beispielsweise alle Bits auf 0 zu setzen). Möchte man also ein einzelnes Bit von 1 auf 0 ändern, muss der gesamte Block, in dem das Bit enthalten ist, zunächst auf 0 gesetzt werden und anschließend müssen alle Bits, die den Wert 1 enthalten, neu geschrieben werden.

Jeder Flashspeicher hat eine vom Hersteller spezifizierte Obermenge an Schreibvorgängen je Block. Wird diese Menge überschritten, fällt der betroffene Block des Flashspeichers aus. Es ist daher ratsam, Nutzdaten so auf dem Flashspeicher abzulegen, zu ändern oder zu löschen, dass möglichst wenige Blöcke neu geschrieben werden müssen. Dies gilt insbesondere für kleine und bauart-/technologiebedingt schlechte eMMC-Bausteine.

In US2019/0026349A1 wird das Empfangen und Verarbeiten von Zeitreihen von Messdaten beschreiben. Empfangene Messdaten werden dabei in Datenstrukturen geschrieben und in Matrizen gespeichert, welche Zeit als eine Dimension und Datenquelle als eine zweite Dimension aufweisen. In einem weiteren Schritt werden die Elemente der Matrizen komprimiert und in Tabellen gespeichert.

### ZUSAMMENFASSUNG DER ERFINDUNG

Es ist Aufgabe der Erfindung, Zeitreihendaten in einem Flashspeicher ressourcenschonend und effizient zu speichern.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft Verfahren zum ressourcensparenden Speichern von Zeitreihendaten aus einer Mehrzahl von Kanälen in einem Flashspeicher. Zeitreihendaten können dabei Daten sein, die regelmäßig anfallen bzw. regelmäßig von einer Datenquelle bzw. einem Kanal erzeugt werden. Zeitreihendaten können eine Reihe von chronologisch aufeinanderfolgenden Werten umfassen, von denen jeder einen Zeitstempel aufweist. Beispielsweise können die Werte im Sekundentakt anfallen. Ein Kanal kann eine bestimmte Datenquelle, wie etwa ein Sensor, eine Messgröße, ein Messort oder eine technische Einrichtung, sein, die die Werte abgibt. Die Werte können auch aus Messwerten berechnet werden.

Der Flashspeicher kann ein NAND-Flashspeicher und/oder ein eMMC-Speicher sein. Ein eMMC-Speicher umfasst in der Regel NAND-Zellen mit einem zusätzlichen, vorgelagerten Speichercontroller, der sich um Adressierung, Fehler- und Defektmanagement und/oder Wear Levelling kümmert. Der Flashspeicher kann nur in vordefinierten Blöcken geschrieben und/oder gelesen werden.

Gemäß einer Ausführungsform der Erfindung umfasst das Verfahren: Empfangen von Zeitreihendaten aus der Mehrzahl von Kanälen. Das Verfahren kann beispielsweise von einer Steuerung einer technischen Anlage durchgeführt werden, die die Zeitreihendaten empfängt und optional daraus weiter Zeitreihendaten erzeugt. Das Verfahren kann von einer in die Steuerung integrierten Zeitreihendatenbank ausgeführt werden. Die Zeitreihendaten zu einem Kanal können eine Mehrzahl von Werten umfassen, denen jeweils ein Zeitstempel zugeordnet ist. Die Zeitreihendaten können Messwerte aus einer technischen Anlage sein und/oder können aus Messwerten aus der technischen Anlage berechnet werden. Einem Kanal kann ein Sensor der technischen Anlage und/oder einer technische Einrichtung der technischen Anlage zugeordnet sein. Die technische Anlage kann ein Wechselrichter sein. Das Verfahren kann ein Verfahren zum ressourcensparenden Speichern von Zeitreihendaten aus einem Wechselrichter sein.

Gemäß einer Ausführungsform der Erfindung umfasst das Verfahren weiter: Aggregieren der Zeitreihendaten des jeweils zugehörigen Kanals für ein Zeitintervall vorbestimmter Länge zu einem Zeitreihenwert. Beispielsweise ist das Zeitintervall eine Minute lang und der Zeitreihenwert ist ein Minutenwert. Die Aggregation kann durch Bilden eines Mittelwerts, Minimums, Maximums und/oder im Allgemeinen eines statistischen Werts über die Werte der Zeitreihe in dem Zeitintervall geschehen. Das Zeitintervall ist in der Regel länger als der Takt der Zeitreihenwerte.

Gemäß einer Ausführungsform der Erfindung umfasst das Verfahren weiter: Sammeln der Zeitreihenwerte in Wertreihen, wobei chronologisch aufeinanderfolgende Zeitreihenwerte für den jeweiligen Kanal für einen vorbestimmten Zeitabschnitt hintereinander in der Wertreihe gespeichert werden. Der Zeitabschnitt umfasst in der Regel eine Mehrzahl von Zeitintervallen. Beispielsweise kann ein Zeitabschnitt 15 Minuten lang sein. Eine Wertreihe je Kanal umfasst damit eine Mehrzahl von chronologisch aufeinanderfolgenden Zeitreihenwerten mit Zeitintervallen in dem Zeitabschnitt.

Gemäß einer Ausführungsform der Erfindung umfasst das Verfahren weiter: Schreiben der Wertreihen der Mehrzahl von Kanälen zu dem Zeitabschnitt als Zeitblock hintereinander in den Flashspeicher. Die Wertreihen gleicher Länge werden aneinandergehängt und zu einem Zeitblock zusammengefasst. Dieser Zeitblock wird dann in einem Schreibvorgang in den Flashspeicher geschrieben.

Auf diese Weise werden die Zeitreihendaten unabhängig voneinander auf Wertreihen aufgeteilt, je Zeitabschnitt auf eine Wertreihe. Diese Aufteilung kann als ein Kompromiss angesehen werden. Er ermöglicht, die Wertreihen unabhängig von den anderen Zeitabschnitten zu schreiben und zusätzlich unterschiedliche Caching-Zeiträume zu definieren. Im Gegenzug erhöht er die Anzahl an getrennten Speicherbereichen, die beschrieben und ausgelesen werden müssen. Die Erfahrung zeigt, dass die Anzahl der benötigten persistenten Intervalle überschaubar ist und die negativen Auswirkungen deshalb nicht spürbar sind.

Gemäß einer Ausführungsform der Erfindung ist ein Zeitpunkt eines Zeitreihenwerts aus einer Position des Zeitreihenwerts in dem Zeitblock bestimmbar. Jeder Zeitreihenwert zu einem Kanal kann in einer Speicherstruktur fester Länge gespeichert werden. Die Position eines Zeitreihenwerts kann ein Vielfaches der Länge der Speicherstruktur sein. Es ist nicht notwendig, dass der Zeitpunkt des Zeitreihenwerts mit dem Zeitreihenwert gespeichert wird.

Gemäß einer Ausführungsform der Erfindung umfasst der Zeitblock eine aus seinen Zeitreihenwerten berechnete Prüfsumme. Prüfsummen können Zahlen sein, die aus einer Menge an Daten, in diesem Fall Zeitreihenwerten, berechnet werden. Verändert man die Daten nicht, ändert sich auch das Ergebnis der Prüfsummenberechnung nicht. Ändert man hingegen die Daten, ändert sich im Regelfall auch die Prüfsumme. Auf diese Weise kann man nachträgliche Änderungen der Daten, beispielsweise durch einen fehlerhaften Schreibvorgang, erkennen. Zudem muss ein neuer Speicherbereich auf einem Flashspeicher, der für einen oder mehrere Zeitblöcke reserviert ist, aber noch nicht von dem Verfahren beschrieben wurde, nicht gelöscht (beispielsweise auf 0 gesetzt) werden. Die vorhandenen und als zufällig zu betrachtenden Speicherzustände des zugewiesenen Speicherbereichs auf dem Flashspeicher können durch die Prüfsumme als ungültige Werte identifiziert werden.

Gemäß einer Ausführungsform der Erfindung werden die Zeitreihendaten, neben dem Zeitintervall, das als erstes Zeitintervall aufgefasst werden kann, für ein oder mehrere weitere Zeitintervalle, wie etwa 5 min, 15 min und/oder 60 min, zu weiteren Zeitreihenwerten aggregiert, wobei das eine oder die mehreren weiteren Zeitintervalle länger sind als das erste Intervall. Es können Zeitreihenwerte zu einer Mehrzahl von unterschiedlich langen Zeitintervallen aus den Zeitreihendaten aggregiert werden.

Gemäß einer Ausführungsform der Erfindung werden die weiteren Zeitreihenwerte als eine oder mehrere weitere Wertreihen chronologisch aufeinanderfolgend für die jeweiligen Kanäle für einen vorbestimmten Zeitabschnitt hintereinander gespeichert. Insbesondere werden Zeitreihenwerte zu unterschiedlichen Zeitintervalllängen in unterschiedliche Wertreihen gespeichert. Die eine oder mehreren weiteren Wertreihen für die Mehrzahl von Kanälen können als weitere Zeitblöcke hintereinander in den Flashspeicher geschrieben werden. In einem Zeitblock können sich lediglich Wertreihen zu einer Zeitintervalllänge befinden.

Gemäß einer Ausführungsform der Erfindung werden chronologisch aufeinanderfolgende Zeitblöcke innerhalb eines Zeitraumes, wie etwa eines Tages, in einer Datei hintereinander in den Flashspeicher geschrieben. Die Zeitblöcke zu einer Datei können alle auf der gleichen Zeitintervalllänge basieren.

Gemäß einer Ausführungsform der Erfindung werden lediglich Zeitblöcke, die dem gleichen Zeitintervall zugeordnet sind, in eine Datei geschrieben. Auf diese Weise werden Wertreihen zu unterschiedlichen Zeitintervalllängen auf mehrere Dateien aufgeteilt.

Gemäß einer Ausführungsform der Erfindung umfasst die Datei einen Header, der den Aufbau der in ihr enthaltenen Zeitblöcke kodiert. Jede Datei kann eine eigene formale Beschreibung ihres Inhalts, d.h. einen Header, enthalten. Der Header ermöglicht es, je Datei die Menge und Art der Kanäle zu definieren. Jede Datei kann somit unabhängig von den anderen Dateien neue Kanäle aufnehmen oder alte Kanäle nicht mehr verwenden. Muss die Kanalliste einer bestehenden Datei geändert werden, so muss nur diese eine Datei neu geschrieben werden. Andere Dateien müssen nicht mit angepasst werden. Neue Dateien können die geänderte Kanalliste direkt übernehmen.

Gemäß einer Ausführungsform der Erfindung umfasst ein Name der Datei die Angabe des Zeitraumes und des Zeitintervalls. Ein Name kann den der Datei zugeordneten Zeitraum (wie etwa ein Tag) und das den Zeitblöcken der Datei zugeordnete Zeitintervall bzw. dessen Zeitintervalllänge (wie etwa 1 min, 5 min, 15 min, 60 min) kodieren. Jede Zeitreihendatei umfasst die Daten aller Kanäle über einen fest definierten Zeitraum. Der Zeitraum kann in den Namen der Datei kodiert sein. Es ist somit möglich, ohne die Datei öffnen zu müssen, den Zeitraum zu ermitteln. Dies kann für Leseanfragen wichtig sein, da das Öffnen von Dateien bereits viel Zeit kosten kann. Alternativ oder zusätzlich kann auch das Zeitintervall in den Namen der Datei kodiert werden.

Gemäß einer Ausführungsform der Erfindung ist ein Zeitpunkt eines Zeitreihenwerts aus einer Position des Zeitreihenwerts in dem Zeitblock, in dem er gespeichert ist, und der Position des Zeitblocks in der Datei bestimmbar. Auch die Zeitblöcke können in Datenstrukturen fester Länge gespeichert sei. Die Länge der Datenstruktur eines Zeitblocks ist beispielsweise durch die Anzahl der Kanäle und die Datenstrukturen der enthaltenen Zeitreihenwerte bestimmt. Diese Informationen können wiederum durch einen Header der Datei vorgegeben sein. Innerhalb einer Datei kann sich so eine feste Länge für alle enthaltenen Zeitblöcke ergeben. So kann mittels dieser festen Länge aus einer Position des jeweiligen Zeitblocks ein Anfangszeitpunkt des Zeitblocks bestimmt werden.

Gemäß einer Ausführungsform der Erfindung wird eine älteste Datei, die einem Zeitintervall zugeordnet ist, gelöscht, wenn eine Datei, die dem Zeitintervall zugeordnet ist, in den Flashspeicher geschrieben wird. Wenn ein festgelegter Zeitraum einer Datei außerhalb eines vorbestimmten Aufbewahrungszeitraumes liegt, kann diese Datei gelöscht werden. Beim Fortschreiten der Zeit wird also wiederholt die älteste Datei gelöscht, während zugleich eine oder mehrere neue Dateien für aktuellere neue Zeiträume angelegt werden. Dies kann als Datei-Round-Robin bezeichnet werden.

Weitere Aspekte der Erfindung betreffen ein Computerprogramm, das, wenn es auf einem Prozessor ausgeführt ist, den Prozessor dazu anleitet, das Verfahren, so wie hierin beschrieben, durchzuführen, und ein computerlesbares Medium, auf dem ein derartiges Computerprogramm gespeichert ist. Ein computerlesbares Medium kann dabei eine Harddisk, ein USB-Speichergerät, ein RAM, ein ROM, ein EPROM oder ein Flashspeicher sein. Ein computerlesbares Medium kann auch ein Datenkommunikationsnetzwerk, wie beispielsweise das Internet, das den Download eines Programmcodes ermöglicht, sein.

Ein weiterer Aspekt der Erfindung betrifft eine Zeitreihendatenbank. Die Zeitreihendatenbank umfasst ein Zeitreihendatenbankmodul, das dazu eingerichtet ist, das Verfahren nach einem der vorhergehenden Ansprüche durchzuführen, und einen Flashspeicher zum Speichern der Dateien. Die Zeitreihendatenbank kann beispielsweise ein Rechner mit einem Prozessor und einem Speicher sein, in dem das Zeitreihendatenbankmodul als Softwaremodul gespeichert ist.

Insgesamt ist mit dem Verfahren und der Zeitreihendatenbank möglich, Zeitreihendaten effizient und ressourcensparend zu persistieren. Die Zeitreihenwerte können schnell geschrieben werden und können schnell gelesen werden. Es ist möglich, Kanäle nachträglich hinzuzufügen und nachträglich zu löschen. Das Schreiben der Zeitreihenwerte auf einen physikalischen Datenträger vom Typ Flashspeicher, insbesondere eMMC, kann so sparsam gestaltet werden, dass der Baustein die geforderte Mindest-Lebenszeit übersteht. Die Datenintegrität nach einem Absturz kann sichergestellt werden. Die Zeitreihenwerte können nach einem konfigurierbaren Aufbewahrungszeitraum wieder gelöscht werden, um Platz für neue Daten zu schaffen. Bei einem Stromausfall bzw. Hard-Reset gehen nur die zeitlich letzten Zeitreihenwerte verloren, die noch nicht geschrieben wurden. Das Maximum dieses Datenverlusts kann konfiguriert werden.

Es ist zu verstehen, dass Merkmale des Verfahrens, so wie oben stehend und unten stehend beschrieben, auch Merkmale des Computerprogramms, des computerlesbaren Mediums und/oder der Zeitreihendatenbank sein können, und umgekehrt.

### KURZE BESCHREIBUNG DER FIGUREN

Im Folgenden werden Ausführungsbeispiele der Erfindung mit Bezug auf die beiliegenden Figuren detailliert beschrieben.
Fig. 1 zeigt schematisch eine technische Anlage mit einer Zeitreihendatenbank gemäß einer Ausführungsform der Erfindung.
Fig. 2 zeigt ein Diagramm, das erläutert, wie Zeitreihendaten für einen Kanal zu Zeitreihenwerten für unterschiedliche Zeitintervalllängen aggregiert werden.
Fig. 3 zeigt schematisch Dateien, die in einer Zeitreihendatenbank gemäß einer Ausführungsform der Erfindung verwendet werden.
Fig. 4 zeigt Dateien aus der Fig. 3 detaillierter.
Fig. 5 zeigt ein Flussdiagramm mit einem Verfahren zum Speichern von Zeitreihendaten gemäß einer Ausführungsform der Erfindung.

Die in den Figuren verwendeten Bezugszeichen und ihre Bedeutung sind in zusammenfassender Form in der Liste der Bezugszeichen aufgeführt. Grundsätzlich sind identische oder ähnliche Teile mit den gleichen Bezugszeichen versehen.

### DETAILLIERTE BESCHREIBUNG VON AUSFÜHRUNGSBEISPIELEN

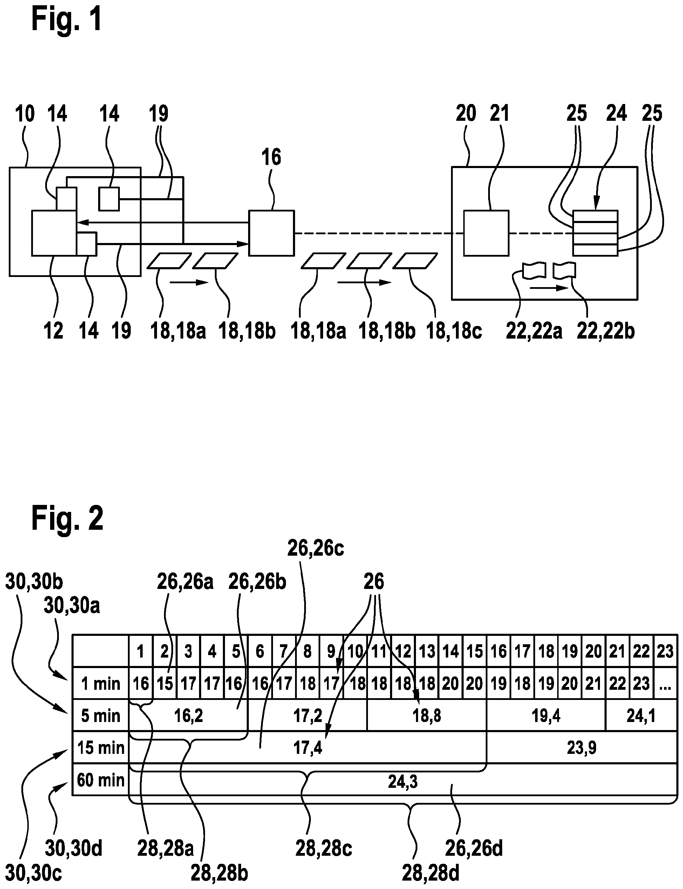

Fig. 1 zeigt eine technische Anlage 10, wie etwa einen Photovoltaik-Wechselrichter, der zum Erzeugen einer Wechselspannung aus einer Gleichspannung ausgeführt ist. Die Gleichspannung kann von einem Photovoltaikpanel zugeführt werden. Die Wechselspannung kann in ein großräumiges Wechselspannungsnetzwerk eingespeist werden. Die technische Anlage 10 umfasst eine steuerbare technische Einrichtung 12, wie etwa einen elektrischen Umrichter, und eine Mehrzahl von Sensoren 14, die etwa eine Spannung, einen Strom, eine Temperatur etc., die in der technischen Anlage 10 anfallen, messen können.

Weiter ist eine Steuerung 16 der technischen Anlage 10 gezeigt, die Steuersignale für die technische Einrichtung 12 erzeugen kann und die Sensorsignale der Sensoren 14 empfangen kann, basierend auf denen beispielsweise die Steuersignale ermittelt werden können. Die Sensorsignale können zumindest teilweise in der Form von Zeitreihendaten 18, 18a, 18b an die Steuerung 16 übermittelt werden. Zeitreihendaten 18 sind dabei Daten, die einem Kanal 19, d.h. in diesem Fall einem der Sensoren 14, zugeordnet sind, und die einen Wert sowie einen Zeitstempel aufweisen. Der Wert kann in diesem Fall ein Messwert und der Zeitstempel ein Messzeitpunkt sein. Beispielsweise kann der Wert eine Temperatur, eine Spannung oder ein Stromwert sein.

Die Steuerung 16 kann basierend auf den Messwerten weitere Zeitreihendaten 18, 18c erzeugen, die zusammen mit den Zeitreihendaten 18a, 18b von den Sensoren 14 an eine Zeitreihendatenbank 20 weitergeleitet werden. Die Zeitreihendaten 18c können einem durch die Steuerung 16 bestimmten Kanal 19 zugeordnet sein, wie etwa einer elektrischen Leistung der Einrichtung 12, die von der Steuerung 15 berechnet wird. Es ist auch möglich, dass die Steuerung 16 aus analogen und/oder digitalen Messsignalen (in etwa ohne Zeitstempel) die Zeitreihendaten 18a, 18b erzeugt und an die Zeitreihendatenbank 20 weiterleitet.

Die Zeitreihendatenbank 20 weist ein Modul 21 und einen Flashspeicher 24 auf, in dem die Zeitreihendaten 18, wie hierin beschrieben, in Dateien 22, 22a, 22b abgespeichert werden. Der Flashspeicher 24 ist in eine Mehrzahl von Flashspeicherblöcken 25 unterteilt, die jeweils nur gesamthaft gelesen und/oder geschrieben werden können.

Die Komponenten 16, 21 können als Hardware-Einheiten vorhanden sein, die einen eigenen Prozessor und Speicher aufweisen und die über Datenkommunikationsleitungen miteinander verbunden sind. Die Komponenten 16, 21 können auch Softwaremodule sein, die in einem Rechner mit einem Prozessor und Speicher implementiert sind.

Die Fig. 2 zeigt beispielhaft, wie die Zeitreihendaten 18 für einen Kanal zu Zeitreihenwerten 26 für unterschiedliche Zeitintervalllängen 28 aggregiert werden. Dabei werden die Zeitreihendaten 18, die in einem Zeitintervall einer Zeitintervalllänge 28 anfallen, zu einem Zeitreihenwert 26 für dieses Zeitintervall aggregiert, beispielsweise durch Mittelwertbildung, Maximalwertbildung, Minimalwertbildung etc.

Es ist möglich, dass die Zeitreihendaten 18 mit Sekundenabstand bzw. in einem vorgegebenen Zeitabstand erfasst und/oder erzeugt werden. Die Zeitintervalllängen 28 sind in der Regel länger als dieser vorgegebene Zeitabstand.

Die Fig. 2 zeigt Wertreihen 30, 30a, 30b, 30c, 30d von Zeitreihenwerten 26a, 26b, 26c, 26d für die unterschiedlichen Zeitintervalllängen 28a, 28b, 28c, 28d, die beispielsweise 1 min, 5 min, 15 min und 60 min betragen können. Die oberste Reihe des Diagramms zeigt dabei die Zeit in Minuten, die darunterliegenden Reihen, die die Wertreihen 30 symbolisieren, die Zeitwerte 26, die über diese Minuten aggregiert wurden.

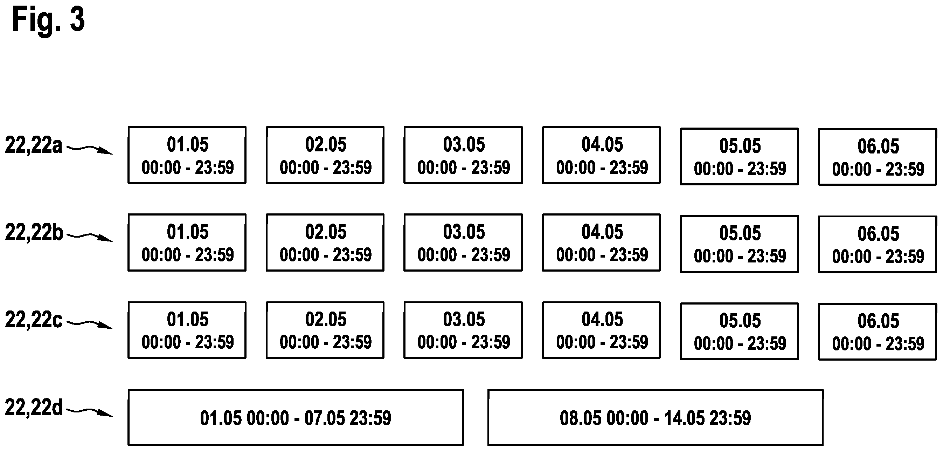

Die Fig. 3 zeigt Dateien 22, 22a, 22b, 22c, 22d, die durch die Zeitreihendatenbank 20 aus den Zeitreihenwerten 26 erzeugt werden und die in dem Flashspeicher 24 gespeichert werden können. In jeder Datei 22a, 22b, 22c, 22d werden die Zeitreihenwerte 26 für verschiedene Kanäle 19 zu einer bestimmten Intervalllänge 28a, 28b, 28c 28d gespeichert. Beispielsweise zeigt die oberste Reihe des Diagramms die Dateien 22a, in denen die Zeitreihenwerte 26a für die Zeitintervalllänge 28a aggregiert wurden.

Es ist zu erkennen, dass in einer Datei 22 die Zeitreihenwerte 26 mehrerer Kanäle 19 für einen bestimmten Zeitraum gespeichert sein können, wie etwa einen Tag. Bei bestimmten Dateien 22a, 22b, 22c zu unterschiedlichen Zeitintervalllängen kann dies der gleiche Zeitraum sein. Bei anderen Dateien 22d, die beispielsweise längere Zeitintervalllängen 28d betreffen, kann dies auch ein anderer Zeitraum, der länger sein kann, sein.

Die Dateien 22 können in dem Flashspeicher 24 mit einem Round-Robin-Verfahren gespeichert werden. Wenn eine neueste Datei 22 für eine Zeitintervalllänge 28 gespeichert werden soll, wird zunächst eine älteste vorhandene Datei 22 für diese Zeitintervalllänge 28 gelöscht.

Die Fig. 3 zeigt den Aufbau der Dateien 22 genauer. Jede Datei 22 umfasst dabei einen Header 32 und Zeitblöcke 34. In dem Header 32 ist der Aufbau der Datei 22, wie etwa die Größe, die Anzahl und/oder der Aufbau der Zeitblöcke 34, abgespeichert. Kommen neue Zeitintervalllängen 28 und/oder Kanäle 19 hinzu bzw. werden diese entfernt, kann sich der Aufbau der Datei 22 und damit der Header 32 ändern.

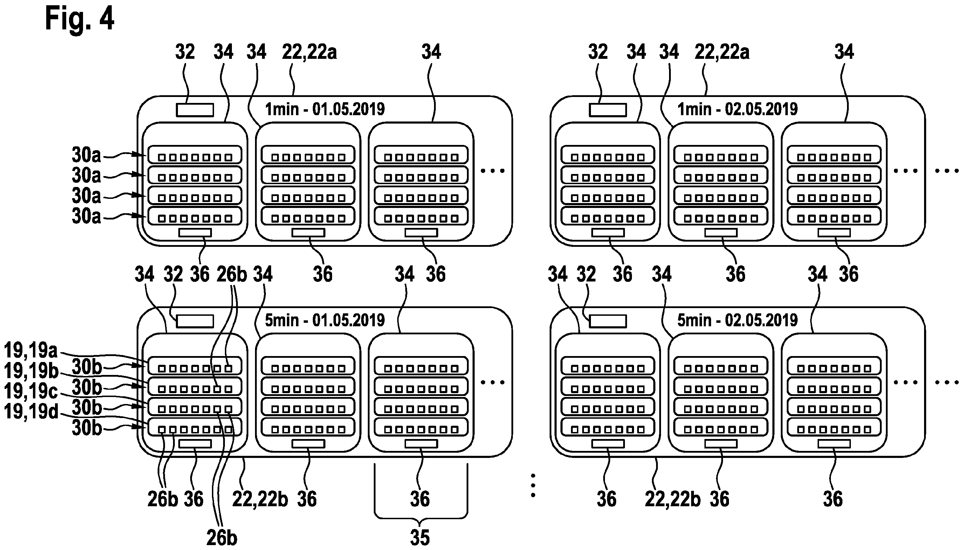

Ein Zeitblock 34 beinhaltet die Zeitreihenwerte 26 aller Kanäle 19 (hier beispielhaft die Kanäle 19a, 19b, 19c, 19d) für einen festen Zeitabschnitt 35. In der Fig.4 ist aus Gründen der Übersichtlichkeit lediglich ein Zeitblock 34 mit Kanälen 19 und Zeitreihenwerten 26b bezeichnet. Die Wertreihen 30 (hier 30a und 30b) zu allen Kanälen (hier 19a bis 19d) werden in die Zeitabschnitte 35 unterteilt. Der gleiche Zeitabschnitt 35 der Wertreihen 30 wird zu einem Zeitreihenblock 34 zusammengefasst.

Aus den Zeitabschnitten 35 aller Zeitblöcke 34 einer Datei 22, die alle aufeinander abfolgen, bestimmt sich der Zeitraum der Datei 22. Die Größe des Zeitabschnitts 35 eines Zeitblocks 34 kann so gewählt werden, dass sie der gewünschten maximalen Cache-Dauer entspricht. Dadurch können die Zeitwerte 26 für einen Zeitblock 34 zunächst gesammelt und dann im Ganzen geschrieben werden.

Dadurch, dass ein Zeitblock 34 die Daten aller Kanäle 19 umfasst und die maximale Cache-Dauer des Flashspeichers 24 ausreizen kann, wird die Menge an Daten, die gleichzeitig geschrieben werden kann, maximiert. Je länger die Cache-Dauer, desto mehr Daten können gleichzeitig geschrieben werden und desto weniger Schreibzugriffe werden durchgeführt. Die Daten werden zudem an nur einem Ort hintereinander abgelegt. Dadurch werden so wenige Flashspeicher-Blöcke 25 wie möglich beschrieben.

Die Zeitreihenwerte 26 innerhalb eines Zeitblocks 34 werden nach Kanal 19 sortiert abgelegt. Das kann es ermöglichen, die Zeitreihenwerte 26 schneller zu lesen, da sie aufeinanderfolgend im Speicher 24 liegen. Dies kann auch ermöglichen, die Anzahl an Flashspeicher-Blöcken 25 zu reduzieren, die für das Nachtragen/Korrigieren beschrieben werden müssen.

Jeder Zeitblock 34 kann auch eine Prüfsumme 36 aufweisen, die je Zeitblock 34 aus den Zeitreihenwerten 26 des Zeitblocks 34 berechnet wird. Die Prüfsumme kann am Ende des Zeitblocks 34 gespeichert sein. Tritt ein Fehler beim Schreiben auf, wird dieser dadurch beim Einlesen des Zeitblocks 34 erkannt und die Zeitreihenwerte 26 können verworfen werden.

Wird eine neue Zeitreihendatei 22 angelegt, kann die Datei 22 zunächst genullt werden, damit die bereits vorhandenen Speicherzustände 22 innerhalb der Datei beim Lesen nicht als gültige Werte fehlinterpretiert werden. Durch die Prüfsumme 36 ist dies nicht mehr notwendig, weil es unwahrscheinlich ist, dass die vorhandenen Speicherzustände passende Paare aus Nutzdaten und Prüfsummen bilden. Die Daten würden demnach korrekterweise als ungültig interpretiert.

Die Zeitreihenwerte 26 innerhalb eines Zeitblocks 34 müssen nicht mit Zeitstempeln gespeichert werden. Die Zeitreihenwerte 26 werden so abgelegt, dass sich der Zeitstempel bzw. das Zeitintervall eines Zeitreihenwerts 26 aus der Position innerhalb des Zeitblocks 34 und der Position des Zeitblocks 34 innerhalb der Datei 22 ergibt. Es kann also nur ein Zeitstempel bzw. Zeitpunkt pro Datei 22 gespeichert sein, wie etwa der Startzeitpunkt der Datei 22. Dieser Zeitstempel kann in dem Header 32 der Datei 22 gespeichert sein.

Neben den Zeitreihenwerten 26 und optional der Prüfsumme 36 kann die Zeitreihendatenbank 20 lediglich eine Konfigurationsdatei, beispielsweise im JSON-Format, und die Headerinformationen 32je Datei 22 schreiben. Die Größe dieser Daten ist im Verhältnis zu den Nutzdaten, d.h. den Zeitreihenwerten 26, vernachlässigbar klein. Die Schreiblast für Verwaltungsdaten fällt somit ebenfalls minimal aus.

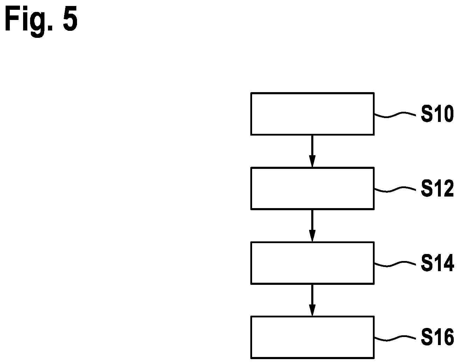

Die Fig. 5 zeigt ein Verfahren zum Speichern von Zeitreihendaten 18 aus der Mehrzahl von Kanälen 19 in dem Flashspeicher 24, das automatisch von der Zeitreihendatenbank 20 durchgeführt werden kann.

Im Schritt S10 werden die Zeitreihendaten 18 aus der Mehrzahl von Kanälen 19 in der Zeitreihendatenbank 20 empfangen. Beispielsweise können die Zeitreihendaten 18 von der Steuerung 16 verschickt werden.

Im Schritt S12 werden die Zeitreihendaten 18 des jeweils zugehörigen Kanals 19 für ein oder mehrere Zeitintervalle 28 vorbestimmter Länge (bzw. verschiedener Länge) zu je einem Zeitreihenwert 26 aggregiert.

Im Schritt S14 werden die Zeitreihenwerte 26 in Wertreihen 30 gesammelt, wobei chronologisch aufeinanderfolgende Zeitreihenwerte 26 für den jeweiligen Kanal 19 für einen vorbestimmten Zeitabschnitt 35 hintereinander in der Wertreihe 30 gespeichert werden. Zeitreihenwerte 26 zu Zeitintervallen unterschiedlicher Länge werden in unterschiedlichen Wertreihen 30 gesammelt. Damit sind Wertreihen 30 vorhanden, die jeweils einem Kanal 19 und einer Zeitintervalllänge zugeordnet sind. Diese Wertreihen 30 werden in Zeitabschnitte 35 aufgeteilt, die je Zeitintervalllänge gleich lang sein können.

Im Schritt S16 werden die Wertreihen 30 der Mehrzahl von Kanälen 19, die einer Zeitintervalllänge und einem Zeitabschnitt 35 zugeordnet sind, als Zeitblock 34 hintereinander in den Flashspeicher 24 geschrieben. Dabei werden Zeitblöcke 34, die verschiedenen Zeitintervallen 28 bzw. verschiedenen Zeitintervalllängen zugeordnet sind, in verschiedene Dateien 22 geschrieben. Eine Datei 22 umfasst chronologisch aufeinanderfolgende Zeitblöcke 34, die einem bestimmten Zeitraum zugeordnet sind.

Wenn eine Datei 22, die einem Zeitintervall 28 zugeordnet ist, geschrieben bzw. abgeschlossen wird, kann eine älteste Datei 22, die dem Zeitintervall 28 zugeordnet ist, gelöscht wird. Fällt eine Datei 22 aus einem gewünschten Aufbewahrungszeitraum heraus, kann die gesamte Datei 22 gelöscht werden. Das Löschen einer Datei kann von einem Betriebssystem organisiert werden. Üblicherweise wird dafür der zugehörige Speicherbereich des Flashspeichers 24 lediglich freigegeben. Es muss also kein größerer Schreibvorgang ausgeführt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum ressourcensparenden Speichern von Zeitreihendaten (18) aus einer Mehrzahl von Kanälen (19) in einem Flashspeicher (24), das Verfahren umfassend:
Empfangen der Zeitreihendaten (18) aus der Mehrzahl von Kanälen (19);
Aggregieren der Zeitreihendaten (18) des jeweils zugehörigen Kanals (19) für ein Zeitintervall (28) vorbestimmter Länge zu einem Zeitreihenwert (26);
Sammeln der Zeitreihenwerte (26) in Wertreihen (30), wobei chronologisch aufeinanderfolgende Zeitreihenwerte (26) für den jeweiligen Kanal (19) für einen vorbestimmten Zeitabschnitt (35) hintereinander in der Wertreihe (30) gespeichert werden; und
Schreiben der Wertreihen (30) der Mehrzahl von Kanälen (19) zu dem Zeitabschnitt (35) als Zeitblock (34) hintereinander in den Flashspeicher (24), wobei der Zeitblock (34) in einem Schreibvorgang in den Flashspeicher geschrieben wird, wobei die Zeitreihendaten (18), neben dem Zeitintervall (28a), für ein oder mehrere weitere Zeitintervalle (28c, 28d, 28d) zu weiteren Zeitreihenwerten (26b, 26c, 26d) aggregiert werden, wobei das eine oder die mehreren weiteren Zeitintervalle (28c, 28d, 28d) länger sind als das erste Intervall (28a) und
wobei die weiteren Zeitreihenwerte (26b, 26c, 26d) als eine oder mehrere weitere Wertreihen (30b, 30c, 30d) chronologisch aufeinanderfolgend für die jeweiligen Kanäle (19) hintereinander gespeichert werden und die eine oder mehreren weiteren Wertreihen (30b, 30c, 30d) für die Mehrzahl von Kanälen (19) als weitere Zeitblöcke (34) hintereinander in den Flashspeicher (24) geschrieben werden.

2. Verfahren nach Anspruch 1,
wobei die Zeitreihendaten (18) zu einem Kanal (19) eine Mehrzahl von Werten umfassen, denen jeweils ein Zeitstempel zugeordnet ist; und/oder
wobei die Zeitreihendaten (18a, 18b) Messwerte aus einer technischen Anlage (10) umfassen und/oder die Zeitreihendaten (18c) aus Messwerten aus der technischen Anlage (10) berechnet sind.

3. Verfahren nach Anspruch 1 oder 2,
wobei einem Kanal (19) ein Sensor (14) einer technischen Anlage (10) und/oder eine technische Einrichtung (12) einer technischen Anlage (10) zugeordnet ist; und/oder
wobei die technische Anlage (10) ein Wechselrichter ist.

4. Verfahren nach einem der vorhergehenden Ansprüche,
wobei ein Zeitpunkt eines Zeitreihenwerts (26) aus einer Position des Zeitreihenwerts (26) in dem Zeitblock (34) bestimmbar ist.

5. Verfahren nach einem der vorhergehenden Ansprüche,
wobei der Zeitblock (34) eine aus seinen Zeitreihenwerten (26) berechnete Prüfsumme (36) umfasst.

6. Verfahren nach einem der vorhergehenden Ansprüche,
wobei chronologisch aufeinanderfolgende Zeitblöcke (34) innerhalb eines Zeitraumes in einer Datei (22) hintereinander in den Flashspeicher (24) geschrieben werden.

7. Verfahren nach Anspruch 6,
wobei lediglich Zeitblöcke (34), die dem gleichem Zeitintervall (28) zugeordnet sind, in die gleiche Datei (22) geschrieben werden.

8. Verfahren nach Anspruch 6 oder 7,
wobei die Datei (22) einen Header (32) umfasst, der den Aufbau der in ihr enthaltenen Zeitblöcke (34) kodiert; und/oder
wobei ein Name der Datei (22) den der Datei (22) zugeordneten Zeitraum und das den Zeitblöcken (34) der Datei zugeordnete Zeitintervall kodiert.

9. Verfahren nach einem der Ansprüche 6 bis 8,
wobei ein Zeitpunkt eines Zeitreihenwerts (26) aus einer Position des Zeitreihenwerts (26) in dem Zeitblock (34), in dem er gespeichert ist, und der Position des Zeitblocks (34) in der Datei (22) bestimmbar ist.

10. Verfahren nach einem der Ansprüche 6 bis 9,
wobei, wenn eine Datei (22), die einem Zeitintervall (28) zugeordnet ist, geschrieben wird, eine älteste Datei (22), die dem Zeitintervall (28) zugeordnet ist, gelöscht wird.

11. Computerlesbares Medium, auf dem ein Computerprogramm gespeichert ist, wobei das Computerprogramm, wenn es auf einem Prozessor ausgeführt ist, den Prozessor dazu anleitet, das Verfahren nach einem der vorhergehenden Ansprüche durchzuführen.

12. Zeitreihendatenbank (20), umfassend:
ein Zeitreihendatenbankmodul (21), das dazu eingerichtet ist, das Verfahren nach einem der vorhergehenden Ansprüche durchzuführen;
einen Flashspeicher (24) zum Speichern der Dateien (22).

## Claims

1. A method for storing time series data (18) from a plurality of channels (19) in a flash memory (24) in a resource efficient manner, the method comprising:
receiving the time series data (18) from the plurality of channels (19);
aggregating the time series data (18) of the respective associated channel (19) for a time interval (28) of predetermined length to a time series value (26);
collecting the time series values (26) into value series (30), wherein chronologically successive time series values (26) for the respective channel (19) for a predetermined time portion (35) are stored consecutively in the value series (30); and
writing the series of values (30) of the plurality of channels (19) at the time portion (35) as a time block (34) one after the other into the flash memory (24), wherein the time block (34) is written into the flash memory in one writing process, wherein the time series data (18), in addition to the time interval (28a), for one or more further time intervals (28c, 28d, 28d) are aggregated to further time series values (26b, 26c, 26d), wherein the one or more further time intervals (28c, 28d, 28d) are longer than the first interval (28a) and
wherein the further time series values (26b, 26c, 26d) are stored as one or more further value series (30b, 30c, 30d) chronologically sequentially for the respective channels (19) one after the other and the one or more further value series (30b, 30c, 30d) for the plurality of channels (19) are written as further time blocks (34) one after the other into the flash memory (24).

2. The method according to claim 1,
wherein the time series data (18) for a channel (19) comprises a plurality of values, each of which is assigned a time stamp; and/or
wherein the time series data (18a, 18b) comprise measured values from a technical system (10) and/or the time series data (18c) are calculated from measured values from the technical system (10).

3. The method according to claim 1 or 2,
wherein a sensor (14) of a technical system (10) and/or a technical apparatus (12) of a technical system (10) is associated with a channel (19); and/or
wherein the technical system (10) is an inverter.

4. The method according to any of the preceding claims,
wherein a time of a time series value (26) is determinable from a position of the time series value (26) in the time block (34).

5. The method according to any of the preceding claims,
wherein the time block (34) comprises a checksum (36) calculated from its time series values (26).

6. The method according to any of the preceding claims,
wherein chronologically successive time blocks (34) within a period of time in a file (22) are written consecutively to the flash memory (24).

7. The method according to claim 6,
wherein only time blocks (34) associated with the same time interval (28) are written to the same file (22).

8. The method according to claim 6 or 7,
wherein the file (22) comprises a header (32) encoding the structure of the time blocks (34) contained therein; and/or
wherein a name of the file (22) encodes the time period associated with the file (22) and the time interval associated with the time blocks (34) of the file.

9. The method according to any of claims 6 to 8,
wherein a time of a time series value (26) is determinable from a position of the time series value (26) in the time block (34) in which it is stored and the position of the time block (34) in the file (22).

10. The method according to any of claims 6 to 9,
wherein, when a file (22) associated with a time interval (28) is written, an oldest file (22) associated with the time interval (28) is deleted.

11. A computer-readable medium on which is stored a computer program, wherein the computer program, when executed on a processor, directs the processor to perform the method of any of the preceding claims.

12. A time series database (20), comprising:
a time series database module (21) configured to perform the method according to any of the preceding claims;
a flash memory (24) for storing the files (22).

## Revendications

1. Procédé de stockage économe en ressources de données de série temporelle (18) provenant d'une pluralité de canaux (19) dans une mémoire flash (24), le procédé comprenant :
la réception des données de série temporelle (18) provenant de la pluralité de canaux (19) ; agrégation des données de série temporelle (18) du canal (19) respectivement associé
pour un intervalle de temps (28) de longueur prédéterminée en une valeur de série temporelle (26) ;
Collecte des valeurs de série temporelle (26) dans des séries de valeurs (30), les valeurs de série temporelle (26) se succédant chronologiquement pour le canal respectif (19) étant mémorisées les unes derrière les autres dans la série de valeurs (30) pendant un intervalle de temps prédéterminé (35) ; et
Écriture des séries de valeurs (30) de la pluralité de canaux (19) dans l'intervalle de temps (35) les unes derrière les autres sous forme de bloc de temps (34) dans la mémoire flash (24), le bloc de temps (34) étant écrit dans la mémoire flash en une seule opération d'écriture, les données de série temporelle (18) étant agrégées, en plus de l'intervalle de temps (28a), pendant un ou plusieurs autres intervalles de temps (28c, 28d, 28d) en d'autres valeurs de série temporelle (26b, 26c, 26d), l'un ou les plusieurs autres intervalles de temps (28c, 28d, 28d) étant plus longs que le premier intervalle (28a) et
les autres valeurs de série temporelle (26b, 26c, 26d) étant mémorisées les unes derrière les autres sous forme d'une ou de plusieurs autres séries de valeurs (30b, 30c, 30d) se succédant chronologiquement pour les canaux respectifs (19) et l'une ou les plusieurs autres séries de valeurs (30b, 30c, 30d) pour la pluralité de canaux (19) étant écrites les unes derrière les autres dans la mémoire flash (24) sous forme d'autres blocs de temps (34).

2. Procédé selon la revendication 1,
dans lequel les données de série temporelle (18) pour un canal (19) comprennent une pluralité de valeurs, auxquelles est associé respectivement un horodateur ; et/ou
dans lequel les données de série temporelle (18a, 18b) comprennent des valeurs de mesure provenant d'une installation technique (10) et/ou les données de série temporelle (18c) sont calculées à partir de valeurs de mesure provenant de l'installation technique (10).

3. Procédé selon la revendication 1 ou 2,
dans lequel un capteur (14) d'une installation technique (10) et/ou un dispositif technique (12) d'une installation technique (10) est associé à un canal (19) ; et/ou
dans lequel l'installation technique (10) est un onduleur.

4. Procédé selon l'une des revendications précédentes,
dans lequel un instant d'une valeur de série temporelle (26) peut être déterminé à partir d'une position de la valeur de série temporelle (26) dans le bloc de temps (34).

5. Procédé selon l'une des revendications précédentes,
dans lequel le bloc de temps (34) comprend une somme de contrôle (36) calculée à partir de ses valeurs de série temporelle (26).

6. Procédé selon l'une des revendications précédentes,
dans lequel des blocs de temps (34) se succédant chronologiquement à l'intérieur d'une période sont écrits les uns derrière les autres dans un fichier (22) dans la mémoire flash (24).

7. Procédé selon la revendication 6,
dans lequel seuls les blocs de temps (34) qui sont associés au même intervalle de temps (28) sont écrits dans le même fichier (22).

8. Procédé selon la revendication 6 ou 7, dans lequel le fichier (22) comprend un en-tête (32) qui code la structure des blocs de temps (34) qu'il contient ; et/ou
dans lequel un nom du fichier (22) code la période associée au fichier (22) et l'intervalle de temps associé aux blocs de temps (34) du fichier.

9. Procédé selon l'une des revendications 6 à 8,
dans lequel un instant d'une valeur de série temporelle (26) peut être déterminé à partir d'une position de la valeur de série temporelle (26) dans le bloc de temps (34) dans lequel elle est stockée et de la position du bloc de temps (34) dans le fichier (22).

10. Procédé selon l'une des revendications 6 à 9,
dans lequel, lorsqu'un fichier (22) associé à un intervalle de temps (28) est écrit, un fichier (22) le plus ancien associé à l'intervalle de temps (28) est effacé.

11. Support lisible par ordinateur sur lequel est stocké un programme d'ordinateur, ledit programme d'ordinateur, lorsqu'il est exécuté sur un processeur, guidant le processeur pour mettre en oeuvre le procédé selon l'une des revendications précédentes.

12. Une base de données de série temporelle (20) comprenant :
un module de base de données de série temporelle (21) adapté pour mettre en oeuvre le procédé selon l'une des revendications précédentes ;
une mémoire flash (24) pour stocker les fichiers (22).
